# EUROPEAN PATENT APPLICATION

(11) **EP 4 372 899 A1**
(43) Date of publication of application: **22.05.2024**
(21) Application number: 22842031.1
(22) Date of filing: 07.07.2022
(51) Int. Cl.: H01M 50/533, H01G 11/14, H01G 11/74, H01G 11/78, H01G 11/82, H01M 10/04, H01M 10/0587, H01M 50/107, H01M 50/342, H01M 50/35, H01M 50/534, H01M 50/538

(54) **COLLECTOR PLATE AND POWER STORAGE DEVICE USING SAME**

(30) Priority: 16.07.2021 JP 2021118059
(71) Applicant: Panasonic Holdings Corporation, Osaka 571-8501 (JP); Panasonic Energy Co., Ltd., Osaka 570-8511 (JP)
(72) Inventor: SAKAMOTO, Shinichi, Kadoma-shi, Osaka 571-0057 (JP); KOZUKI, Kiyomi, Kadoma-shi, Osaka 571-0057 (JP); GESHI, Shinya, Kadoma-shi, Osaka 571-0057 (JP); OKUTANI, Oose, Kadoma-shi, Osaka 571-0057 (JP)
(74) Representative: Novagraaf International SA
(86) International application number: PCT/JP2022/026934
(87) International publication number: WO 2023/286687

(57) **Abstract**

A plate-shaped current collector plate includes a first main surface and a second main surface that is opposite to the first main surface. The current collector plate includes: a first portion that is positioned at a central portion of the current collector plate; a plurality of second portions that extend in a first direction away from the first portion; and a plurality of third portions which extend from portions of the plurality of second portions spaced apart from the first portion and protrude in a second direction that intersects with the first direction. In two adjacent second portions of the plurality of second portions, a gap is provided between a third portion that extends from one of the two adjacent second portions among the plurality of third portions and a third portion that extends from an other one of the two adjacent second portions among the plurality of third portions.

## Description

### TECHNICAL FIELD

The present disclosure relates to a current collector plate and a power storage device using the current collector plate.

### BACKGROUND ART

With the increasing demand for in-vehicle applications, power storage devices, such as secondary batteries, are required to have even higher output and capacity.

As a current collection structure to obtain high output, a so-called end-face current collection structure has been considered in which an exposed portion of a negative or positive electrode current collector protrudes from an end face of a wound electrode group and is welded to the current collector plate.

For example, Patent Literature (PTL) 1 discloses a secondary battery as an example of a power storage device including the end-face current collection structure. The secondary battery includes: a case; an electrode assembly which includes a positive electrode plate, a negative electrode plate, and a separator interposed between the positive electrode plate and the negative electrode plate, and which is mounted inside the case; a cap assembly that seals the case; and a positive electrode current collector plate and a negative electrode current collector plate that are electrically connected to the positive electrode plate and the negative electrode plate of the electrode assembly, respectively. At least one of the positive electrode current collector plate or the negative electrode current collector plate includes a plate-shaped body and a contact portion that projects from the body to contact the corresponding positive electrode plate or negative electrode plate.

### Citation List

### Patent Literature

[PTL 1] Japanese Unexamined Patent Application Publication No. 2005-203374

### SUMMARY OF THE INVENTION

The higher the capacity and output of a power storage device, the more gas is generated during abnormal heat generation, and a large amount of hot gas must be exhausted quickly.

The current collector plates and battery disclosed in PTL 1 have a structure that makes it difficult to exhaust gas during abnormal heat generation. Hence, there is a risk that the gas may not be exhausted in time after the explosion-proof valve is activated, resulting in a high temperature condition being maintained. As a result, for example, when a plurality of power storage devices are arranged to form a module, heat generated due to high temperature may be transmitted to adjacent power storage devices, causing damage.

One aspect of the present disclosure relates to a current collector plate that is plate shaped and includes a first main surface and a second main surface that is opposite to the first main surface. The current collector plate includes: a first portion that is positioned at a central portion of the current collector plate; a plurality of second portions that extend in a first direction away from the first portion; and a plurality of third portions that extend from portions of the plurality of second portions spaced apart from the first portion, the plurality of third portions protruding in a second direction that intersects with the first direction. In two adjacent second portions of the plurality of second portions, a gap is provided between a third portion that extends from one of the two adjacent second portions among the plurality of third portions and a third portion that extends from an other one of the two adjacent second portions among the plurality of third portions.

Another aspect of the present disclosure relates to a power storage device which includes: a wound body which is columnar shaped, and in which a positive electrode and a negative electrode are wound with a separator interposed between the positive electrode and the negative electrode; a case that houses the wound body; and the current collector plate described above. The battery case includes a tubular portion and a bottom portion that closes one end of the tubular portion, and at least the first portion of the current collector plate is electrically connected to the bottom portion of the case on the first main surface side, and at least the plurality of second portions of the current collector plate are joined, on the second main surface side, to one electrode of the positive electrode or the negative electrode on an end face of the wound body that faces the second main surface.

Use of the current collector plate according to the present disclosure increases the safety of the power storage device.

### BRIEF DESCRIPTION OF THE DRAWINGS

[FIG. 1A] FIG. 1A is a top view illustrating an appearance of a current collector plate according to an embodiment of the present disclosure.
[FIG. 1B] FIG. 1B is a cross-sectional view taken along X₁-X₂ of FIG. 1A.
[FIG. 2] FIG. 2 is a perspective view illustrating an appearance of the current collector plate according to the embodiment of the present disclosure.
[FIG. 3A] FIG. 3A is a top view illustrating another example of the current collector plate according to the embodiment of the present disclosure.
[FIG. 3B] FIG. 3B is a top view illustrating another example of the current collector plate according to the embodiment of the present disclosure.
[FIG. 4] FIG. 4 is a lateral view illustrating an appearance of a battery according to the embodiment of the present disclosure.
[FIG. 5] FIG. 5 is a schematic diagram illustrating a state of the battery according to the embodiment of the present disclosure in which the current collector plate is arranged in a case, with the case partially cut away.
[FIG. 6] FIG. 6 is a longitudinal cross-sectional view illustrating a configuration of the battery according to the embodiment of the present disclosure, particularly on a bottom side.
[FIG. 7] FIG. 7 is a perspective view illustrating another example of the current collector plate according to the embodiment of the present disclosure.
[FIG. 8A] FIG. 8A is an enlarged top view of a first portion and a region around the first portion of another example of the current collector plate according to the embodiment of the present disclosure.
[FIG. 8B] FIG. 8B is an enlarged top view of a first portion and a region around the first portion of another example of the current collector plate according to the embodiment of the present disclosure.
[FIG. 9] FIG. 9 is a schematic cross-sectional view illustrating another example of the current collector plate according to the embodiment of the present disclosure.

### DESCRIPTION OF EMBODIMENT

Hereinafter, an embodiment of the present disclosure will be described. In the following description, an embodiment of the present disclosure will be described based on examples, but the present disclosure is not limited to the examples described below. In the following description, specific numerical values, materials and the like may be exemplified, but other numerical values, other materials, and the like may be used as long as the advantageous effects of the present disclosure are obtained.

A current collector plate according to one aspect of the present disclosure is plate shaped and includes a first main surface and a second main surface that is opposite to the first main surface. The current collector plate includes: a first portion that is positioned at a central portion of the current collector plate; and a plurality of second portions that extend in a first direction away from the first portion. The current collector plate further includes a plurality of third portions which extend from portions of the plurality of second portions spaced apart from the first portion, and which protrude in a second direction that intersects with the first direction.

A current collector plate is provided in a power storage device, such as a battery (for example, a secondary battery). The power storage device includes, for example, a case including a tubular portion and a bottom portion that closes one end of the tubular portion. A columnar-shaped wound body in which a positive electrode and a negative electrode are wound with a separator in between is housed in the case so that one end face of the wound body faces the bottom portion of the case. The other end of the tubular portion of the case has an opening. The opening of the case is closed with the wound body housed, and is maintained airtight. The method of sealing the opening of the case is not particularly limited, and any known method may be used.

Here, the current collector plate is arranged between the bottom portion of the case and the wound body, so that the first main surface of the current collector plate faces the bottom portion of the case, and the second main surface of the current collector plate faces the one end face of the wound body. The current collector plate is electrically connected to either the positive electrode or the negative electrode at the end face of the wound body, and is also electrically connected to the bottom portion of the case.

The current collector plate may be electrically connected to the positive electrode or the negative electrode depending on the configuration of the power storage device. In other words, the current collector plate may be a positive electrode current collector plate or a negative electrode current collector plate.

The bottom portion of the case can include an explosion-proof mechanism such as a thin portion or an engraving. When the internal pressure increases to a predetermined threshold value or higher due to the gas generated during abnormal heat generation, the explosion-proof mechanism is activated so that the generated gas is exhausted to the outside of the case. This will stop the abnormal heat generation condition. However, when a current collector plate is arranged between the bottom portion of the case and the wound body, exhausting of gas may be obstructed depending on the shape of the current collector plate, and the gas exhaust speed may be slowed down. As a result, it may not be possible to stop the abnormal heat generation condition immediately, and the effects of the heat from the abnormal heat generation may extend to the outside (for example, to adjacent power storage devices).

Each of the second portions of the current collector plate extends from the first portion positioned at the central portion of the current collector plate in a first direction away from the first portion. In other words, the second portions extend, for example, radially from the first portion with the first portion as a center. When the current collector plate is arranged inside the case, the first portion is positioned at the central portion of the bottom portion of the case, and the second portions extend from the central portion of the bottom portion of the case toward the tubular portion. Hereinafter, the first direction in which each second portion extends may be referred to as the "radial direction".

Each of the third portions extends from a portion of the second portion that is spaced apart from the first portion, and protrudes in a second direction that intersects with the first direction (for example, along the circumferential direction of the tubular portion). In adjacent two second portions, a third portion extending from one of the two second portions and a third portion extending from the other second portion are spaced apart from each other, forming a gap therebetween. A gap is provided which extends in the radial direction between the third portions and the second portions. This gap functions as an exhaust path for the generated gas to be exhausted during abnormal heat generation.

Accordingly, by using the current collector plate with the second portions and the third portions, the gas generated during abnormal heat generation can be exhausted at high speed, and the abnormal heat generation condition can be stopped immediately.

In addition, the third portions have the effect of holding the wound body inside the case when the gas is exhausted. This is due to the fact that the third portions increase the rigidity of the portions of the current collector plate where the third portions are provided. In addition, a gap is provided between the third portions extending from the adjacent second portions. This allows the third portions to more actively enter the exposed portion of the current collector of the electrically connected wound body. The third portion entering further to the exposed portion allows the current collector plate to be more firmly fixed to the exposed portion of the current collector plate, and allows the electrical resistance between the third portion and the exposed portion of the current collector to be reduced.

In order not to obstruct exhausting of gas, it is preferable that the explosion-proof mechanism provided at the bottom portion of the case be positioned on the region which is on the inner side relative to the third portions and which does not overlap with the third portions. In other words, it is preferable that the third portions extend on the outer side relative to the region where the explosion-proof mechanism is provided, while protruding in the second direction that intersects with the radial direction. However, the explosion-proof mechanism only needs to be positioned inside the outermost periphery of the third portions. Here, at least part of the third portions may be positioned outside the region in the bottom portion of the case where the explosion-proof mechanism is provided. In the third portions, by increasing the proportion of the portion positioned outside the explosion-proof mechanism, the effect of holding the wound body within the case is further increased.

At least two second portions may be provided. In the case of a current collector plate including two second portions, the two second portions may extend from the first portion in mutually opposite directions. In this case, the current collector plate viewed from the first main surface side or the second main surface side can be I-shaped.

At least three second portions may be provided. In this case, a gap is provided between the adjacent second portions and between the adjacent third portions. The gap between the second portions is wider than the gap between the third portions. In this case, the current collector plate has a configuration that makes it easy to efficiently exhaust gas generated during abnormal heat generation, while restraining the wound body.

When at least three second portions are provided, the second portions may be, for example, arranged at equiangular positions in the circumferential direction, although the second portions are not limited to such an example. In other words, among a plurality of second portions, the angles formed by adjacent second portions may be identical to each other. The number of second portions is preferably at least three in terms of efficiently exerting the effect that the third portions restrain the wound body. On the other hand, the number of second portions may be at most six, for example, in terms of efficiently exhausting gas and easily manufacturing the power storage device. In particular, a current collector plate, which includes four second portions and third portions protruding from the four second portions, is capable of achieving a high degree of effectiveness in both restraining the wound body and efficiently exhausting gas.

Each of the second portions may include a portion that extends in the radial direction while protruding toward the second main surface side. The portion that protrudes toward the second main surface side is a recess when viewed from the first main surface side, and the recess extends in the radial direction to form a groove. When the current collector plate is arranged between the bottom portion of the case and the wound body, the current collection plate can preferentially contact the wound body at the groove. Accordingly, an electrical connection can be made between the current collector plate and one of the electrodes of the wound body via the groove. The electrical connection can be made, for example, by pressing the current collector plate against the wound body so that the groove contacts the one electrode, and welding the one electrode to the current collector plate in the groove. In addition, since this protruding portion is recessed when viewed from the first main surface side, it is possible to prevent this protruding portion from being thick.

The thickness of the current collector plate may range, for example, from 0.1 mm to 1.0 mm. In that case, the first portion may be thicker than each second portion. Such a thickness relationship is capable of preventing the laser from penetrating the first portion when joining the first portion and the bottom portion of the case. Moreover, when joining each second portion to the exposed portion of the current collector of the electrode in the wound body, it is possible to prevent the exposed portion from receiving excessive heat damage. Moreover, it is possible to prevent the molten material from the second portion from entering the inside of the wound body. For example, the thickness of the second portion (in particular, the bottom portion of the groove) may be 0.3 mm, and the thickness of the first portion may be 0.4 mm.

The first portion may include a protruding surface that protrudes toward the first main surface side. When the current collector plate is arranged between the bottom portion of the case and the wound body, the protruding surface of the first portion can contact with the bottom portion of the case. Accordingly, an electrical connection between the current collector plate and the case can be made on the protruding surface. The electrical connection can be made, for example, by laser welding from the outside of the case. Here, the welding mark formed by laser welding may be annular or at least one point when viewed from the first main surface side or the second main surface side. Alternatively, joining may be performed from the inside of the case by resistance welding or cold pressure welding.

In addition, on the outer periphery of the first portion, a portion may be provided which protrudes in an annular shape toward the second main surface side that faces the wound body, and/or a portion may be provided which is recessed in an annular shape toward the second main surface side. The annular protruding portion prevents the exposed portion of the current collector from being displaced toward the central portion of the first portion. Moreover, the exposed portion of the current collector entering the annular recessed portion prevents the exposed portion from being displaced toward the central portion of the first portion. With this configuration, the first portion can be joined to the case without being affected by the bonding state between the second portions and the exposed portion of the current collector. In addition, since the displacement of the exposed portion of the current collector is prevented, it is possible to prevent the electrode from being tilted within the wound body and the distance between the adjacent positive and negative electrodes from varying within the wound body. When the first portion includes such an annular protruding portion or annular recessed portion, the exposed portion of the current collector does not necessarily abut on the annular protruding portion or enter the annular recessed portion.

A through hole may be provided in the first portion to further promote exhausting of gas and to facilitate injection of electrolyte during the manufacturing process. The through hole can be provided in the first portion in the region where joining with the bottom portion of the case by welding is not to be made. Additionally, the through hole can improve the circulation of the electrolyte. The through hole may be arranged so as not to overlap with an imaginary line (or imaginary region) connecting the shortest distance between the joint portion of the first portion with the bottom portion of the case and the groove of the second portion. In this case, it is possible to prevent the current flowing between the groove electrically connected to the wound body and the joint portion from bypassing the through hole. Accordingly, the current collection path between the groove and the joint portion can be shortened.

The current collector plate may further include plated layers stacked on the first main surface and the second main surface. Here, the thickness of the plated layer stacked on the first main surface may be thinner than the thickness of the plated layer stacked on the second main surface. In this case, when the metal that forms the plated layer is a metal with high reflectance, it is possible to prevent the plated layer on the first main surface from reflecting the laser when welding is performed by emitting the laser from the outside of the case. Examples of the material (base layer) of the current collector plate include iron, stainless steel, and copper, when connection is made to the negative electrode, and include aluminum, and iron, when connection is made to the positive electrode. Examples of the plated layers include nickel. The plated layers are not essential in the current collector plate according to the present disclosure.

The electrical connection between the current collector plate and one electrode of the wound body can be mainly made on the second portions. On the other hand, the electrical connection between the current collector plate and the case can be mainly made on the first portion. The third portions may also contribute to the electrical connection between the current collector plate and the case or one electrode of the wound body. For example, in order to make an electrical connection between the current collector plate and the case on the third portions, a portion of each third portion (for example, the tip end portion in the protruding direction of the third portion protruding from the second portion) may include a protrusion that protrudes toward the first main surface side.

When each third portion includes a protrusion that protrudes toward the first main surface side, the surface of the bottom portion of the case that faces the first main surface may include a recess. The recess is engaged with the protrusions of the third portions. This not only improves the electrical connection between the current collector plate and the case, but also increases the effectiveness of holding the wound body within the case when gas is exhausted during abnormal heat generation.

The power storage device according to one embodiment of the present disclosure is suitable for, for example, a non-aqueous electrolyte secondary battery, an alkaline storage battery, or a capacitor, and contributes to increasing the output of the non-aqueous electrolyte battery. Examples of the non-aqueous electrolyte batteries include lithium-ion secondary batteries, and all-solid-state batteries.

A power storage device according to one embodiment of the present disclosure includes: a wound body which is columnar shaped, and in which a positive electrode and a negative electrode are wound with a separator interposed between the positive electrode and the negative electrode; a case that houses the wound body; and the current collector plate described above. The case includes a tubular portion and a bottom portion that closes one end of the tubular portion. At least the first portion of the current collector plate is electrically connected to the bottom portion of the case on the first main surface side, and at least the plurality of second portions of the current collector plate are joined, on the second main surface side, to one electrode of the positive electrode or the negative electrode on an end face of the wound body that faces the second main surface.

The other of the positive and negative electrodes of the wound body is usually electrically connected to a terminal plate provided on the other end of the tubular portion. The terminal plate closes the opening provided at the other end of the tubular portion. The space between the opening of the tubular portion and the terminal plate is airtightly sealed. The sealing method is not particularly limited, and any known method can be used.

The method of electrically connecting the other of the positive and negative electrodes of the wound body and the terminal plate is not particularly limited, either. The electrical connection may be made by attaching one end of the internal lead to the other electrode and connecting the other end of the internal lead to the terminal plate, or the electrical connection may be made via a current collector plate.

When an electrical connection is made between the other of the positive and negative electrodes of the wound body and the terminal plate via a current collector plate, the current collector plate interposed between the bottom portion of the case and one of the positive and negative electrodes of the wound body is referred to as a first current collector plate. On the other hand, the current collector plate interposed between the terminal plate and the other of the positive and negative electrodes of the wound body is referred to as a second current collector plate to distinguish between the two. As described above, the first current collector plate includes a first portion, second portions, and third portions.

The second current collector plate may be a current collector plate with a conventional configuration, or may be a current collector plate that includes a first portion, second portions, and third portions in a similar manner to the first current collector plate. When the second current collector plate has the same configuration as the first current collector plate, the first portion, the second portions, and the third portions are defined with the surface of the second current collector plate facing the terminal plate being considered as a first main surface, and the surface of the second current collector plate that is opposite to the first main surface and faces the wound body being considered as a second main surface.

By using the second current collector plate, which includes the first portion, the second portions, and the third portions, it is possible to quickly exhaust gas from the terminal plate side in addition to the gas from the bottom portion of the case, in the event of abnormal heat generation. As a result, it is possible to easily stop the abnormal heat generation condition immediately.

The size of the power storage device (battery) is not particularly limited. For example, the outer diameter of the case may be at least 18 mm, at least 21 mm, or at least 46 mm. As the outer diameter of the battery increases, the output increases, but the amount of gas generated during abnormal heat generation also increases. Hence, it is effective to use the current collector plate according to the present disclosure. In addition, the ratio of the area of the region where the explosion-proof mechanism (for example, explosion-proof valve) is provided at the bottom portion of the case to the area of the bottom portion may be 90% or less, and may be 80% or less. The area of the region where the explosion-proof mechanism is provided is the area of the circumscribed circle which has the center at the center of the bottom portion of the case and which contacts the peripheral edge of the explosion-proof mechanism when the bottom portion of the case is viewed from the axial direction (height direction) of the case.

Moreover, the current collector plate according to the present disclosure can be employed in the configuration of any power storage device, regardless of whether the power storage device a primary battery or a secondary battery, and regardless of the configuration of the positive electrode or negative electrode.

Hereinafter, a current collector plate according to an embodiment of the present disclosure will be specifically described with reference to the drawings, with an example where the current collector plate is used in a lithium-ion secondary battery which is an example of a power storage device.

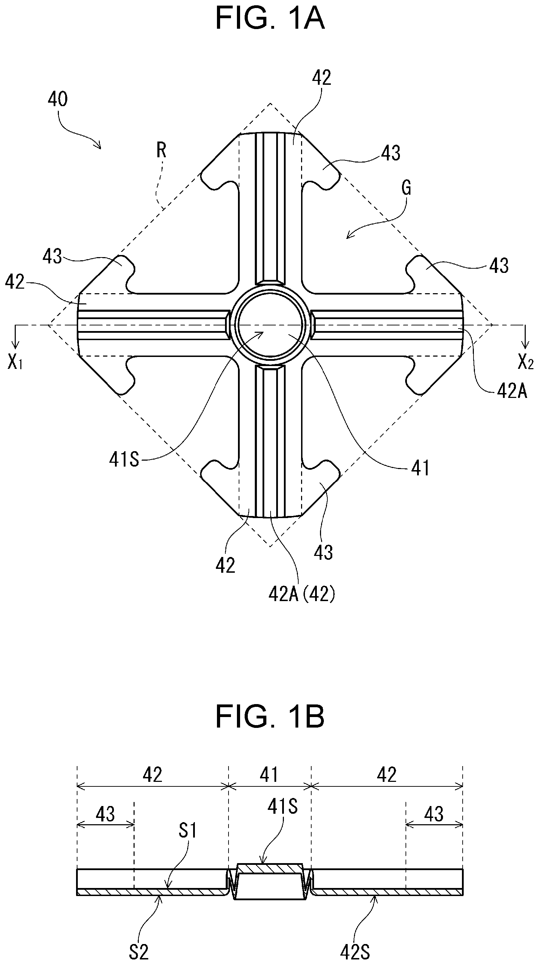

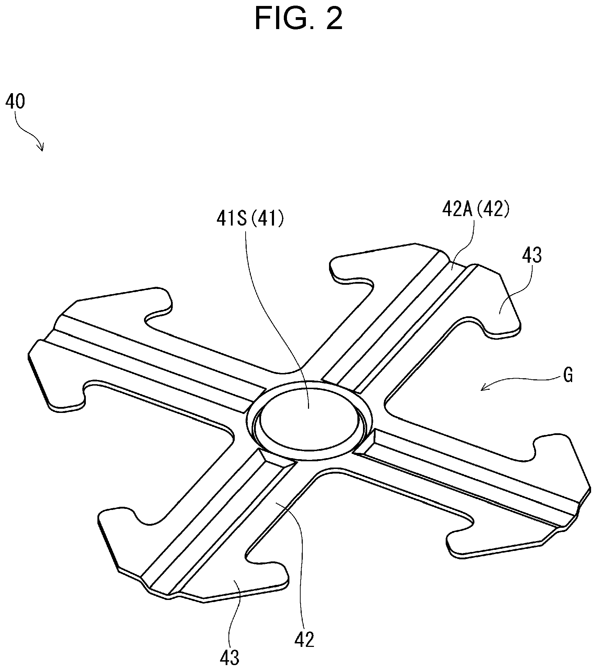

FIG. 1A, FIG. 1B, and FIG. 2 each illustrate an example of a configuration of a current collector plate according to an embodiment of the present disclosure. FIG. 1A is a top view illustrating an appearance of the current collector plate, and FIG. 1B is a cross-sectional view taken along X₁-X₂ of FIG. 1A. FIG. 2 is a perspective view of the current collector plate viewed from a first main surface side (bottom side of a case).

Current collector plate 40 includes: first portion 41 at the central portion of current collector plate 40; a plurality of second portions 42 which extend radially in a first direction (radial direction) away from first portion 41; and a plurality of third portions 43 which extend from portions of the plurality of second portions 42 spaced apart from first portion 41 and protrude in a second direction (circumferential direction) intersecting with the first direction. In the adjacent ones of second portions 42, the third portion extending from one second portion toward the other second portion is spaced apart from the third portion extending from the other second portion to the one second portion. In other words, a gap is provided between the third portion extending from the one second portion and the third portion extending from the other second portion.

Current collector plate 40 is plate shaped, and includes first main surface S1 and second main surface S2 that is opposite to (on the back side of) first main surface S 1. Current collector plate 40 is, for example, a metal plate, which is formed by being punched into a predetermined shape and then processed into a shape having unevenness by press molding. When current collector plate 40 is arranged in the battery, current collector plate 40 is arranged between the bottom portion of the case and the wound body so that first main surface S 1 faces the bottom portion of the case and second main surface S2 faces the wound body. Note that FIG. 2 illustrates an appearance of the current collector plate viewed from the first main surface S 1 side (bottom side of the case).

As illustrated in FIG. 1A, FIG. 1B, and FIG. 2, first portion 41 includes protruding surface 41S that protrudes toward the first main surface S1 side. Protruding surface 41S contacts the bottom portion of the battery case, so that current collector plate 40 and the case are electrically connected.

On the other hand, each second portion 42 includes protruding surface 42S that protrudes toward the second main surface S2 side. The protruding surface extends along the direction in which second portion 42 extends. When viewed from the first main surface side, groove 42A is provided which extends along the direction in which second portion 42 extends. Current collector plate 40 and one electrode of the wound body are electrically connected at groove 42A.

Gap G is provided between adjacent second portions 42 and between adjacent third portions 43 that are continuous from second portions 42. The gas generated during abnormal heat generation can be efficiently released through this gap G. Since adjacent third portions 43 extend from the tip portions of second portions 42 so as to approach each other, the width of gap G between second portions 42 is wider than the width of gap G between third portions 43.

Third portion 43 extends in a direction substantially perpendicular to the direction in which second portion 42 extends so as to protrude from second portion 42 on both sides. With this, the wound body is restrained and fixed so that the wound body does not pop out of the case.

In the examples of FIG. 1A, FIG. 1B, and FIG. 2, in current collector plate 40, four second portions 42 extend radially from first portion 41 so as to form an angle of 90 degrees with each other. Moreover, each third portion 43 extends from the tip end portion of second portion 42 while receding toward first portion 41, so that the entire shape of the second portion and third portions 43 that are continuous with the second portion forms an arrowhead. As a result, as can be seen from FIG. 1A, a portion of the outline of each of third portions 43 is in contact with predetermined square R. The overall outline shape of current collector plate 40 is thus inscribed in a square.

In this case, current collector plate 40 is capable of achieving a high degree of effectiveness in both fixing the wound body and efficiently exhausting gas. In addition, the square-inscribed outline shape of current collector plate 40 reduces the amount of residue that remains when punching a metal plate to manufacture current collector plate 40, leading to an increased production efficiency.

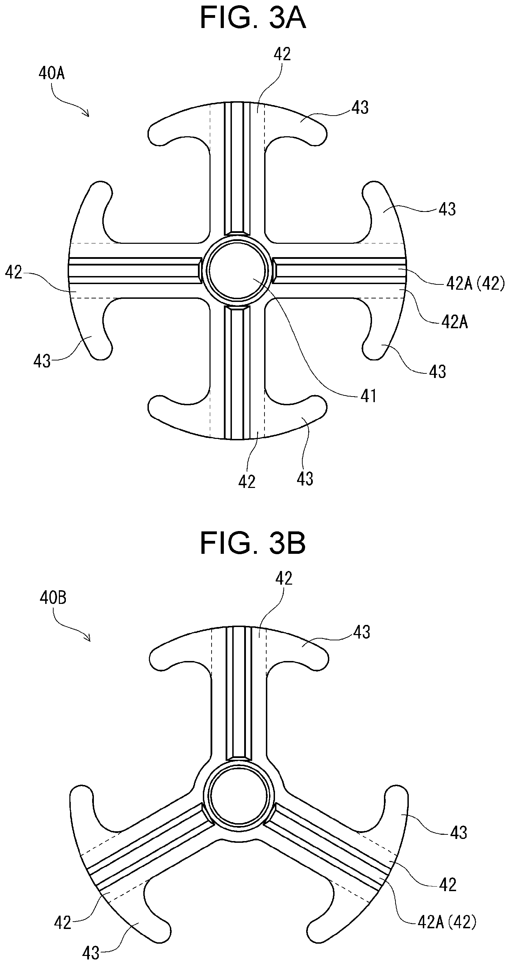

FIG. 3A and FIG. 3B illustrate other examples of the configuration of the current collector plate according to one embodiment of the present disclosure. FIG. 3A and FIG. 3B each illustrate a top view of the current collector plate from the first main surface side (the bottom side of the case).

Current collector plate 40A illustrated in FIG. 3A is an example in which third portions 43 extend from the tip ends of second portions 42 in an arc shape. In this example, when current collector plate 40A is arranged inside the battery, arcuate third portions 43 can extend along the inner peripheral wall of the battery case.

Current collector plate 40B illustrated in FIG. 3B is an example in which three second portions 42 extend from first portion 41. In current collector plate 40B, three second portions 42 extend radially from first portion 41 at an angle of 120 degrees with each other. Third portions 43 are arranged to extend in an arc shape from the tip ends of second portions 42. Arcuate third portions 43 can be arranged inside the battery to extend along the inner peripheral wall of the battery case.

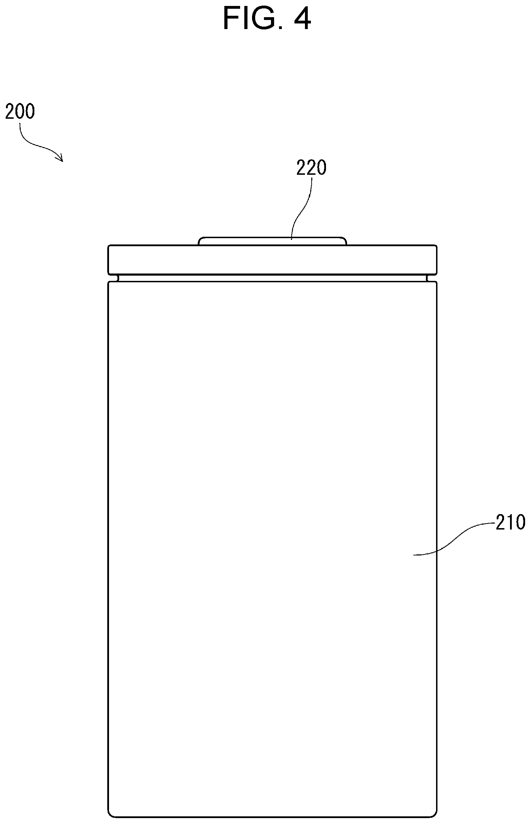

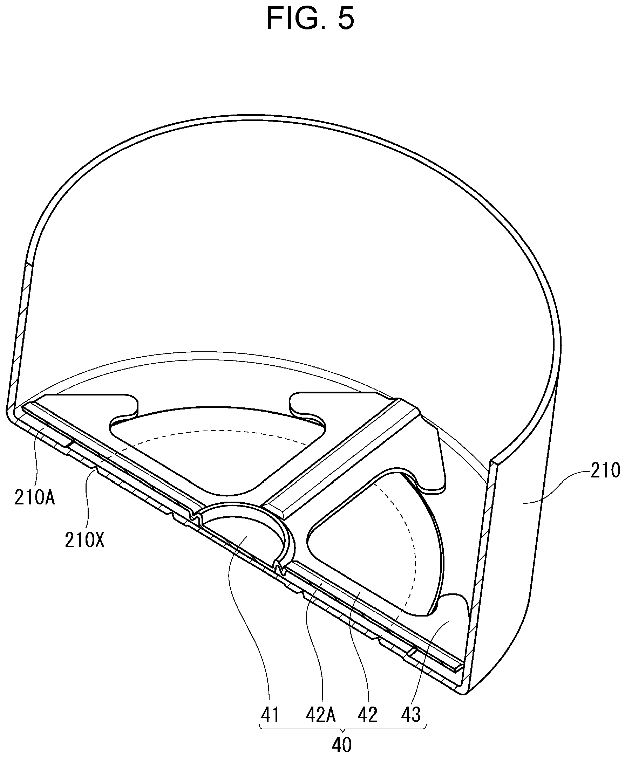

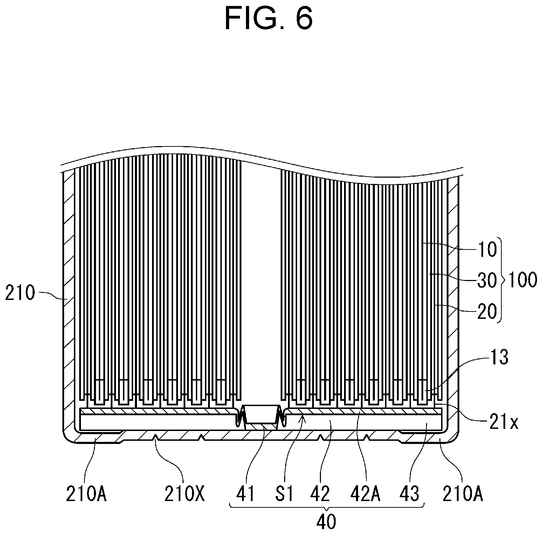

FIG. 4 is a lateral view illustrating an appearance of battery 200 according to the present embodiment in which current collector plate 40 is arranged. FIG. 5 is a schematic diagram illustrating a state in which case 210 and current collector plate 40 are arranged, with case 210 partially cut away. FIG. 6 is a longitudinal cross-sectional view illustrating an internal configuration of the bottom side of case 210 of battery 200.

Battery 200 includes: wound body 100 which is columnar shaped and in which positive electrode 10 and negative electrode 20 are wound with separator 30 interposed between positive electrode 10 and negative electrode 20; non-aqueous electrolyte (not illustrated); bottomed metal case 210 that houses wound body 100 and the non-aqueous electrolyte; and sealing plate 220 that seals the opening of case 210. Although not illustrated in FIG. 4 and FIG. 5, a gasket is provided at the peripheral edge portion of sealing plate 220. By crimping the opening end of case 210 to gasket, the inside of case 210 is sealed.

Positive electrode 10 is in the form of an elongated sheet, and includes a positive electrode current collector and a positive electrode active material layer supported on the positive electrode current collector. The positive electrode active material layer is provided on both sides of the positive electrode current collector. However, a positive electrode current collector exposed portion that does not include a positive electrode active material layer can be provided at one longitudinal end of the positive electrode current collector. The positive electrode can be electrically connected to the sealing plate via the exposed portion. In other words, the sealing plate functions as an external positive terminal. The other longitudinal end of the positive electrode current collector is covered with insulating layer 13.

Negative electrode 20 is in the form of an elongated sheet, and includes a negative electrode current collector and a negative electrode active material layer supported on the negative electrode current collector. The negative electrode active material layer is provided on both sides of the negative electrode current collector. However, negative electrode current collector exposed portion 21x that does not include a negative electrode active material layer is provided at one longitudinal end of the negative electrode current collector.

Current collector plate 40 (negative electrode current collector plate) is arranged between the bottom portion of case 210 and wound body 100. First portion 41 of current collector plate 40 protrudes toward the first main surface S1 side, and is in contact with the bottom portion of case 210. At the contact position, current collector plate 40 is welded to the bottom portion of case 210.

Moreover, current collector plate 40 abuts on negative electrode current collector exposed portion 21x at groove 42A that is provided in second portion 42 and that protrudes toward the second main surface side opposite to first main surface S 1. At groove 42A, current collector plate 40 and negative electrode current collector exposed portion 21x are welded. Accordingly, case 210 functions as an external negative terminal.

The bottom portion of case 210 includes thin portion 210X. When the internal pressure of the battery increases during abnormal heat generation and the internal pressure increases to a predetermined threshold value or higher, thin portion 210X of case 210 ruptures so that gas is exhausted. Third portions 43 of current collector plate 40 have a function of fixing wound body 100 within case 210 as the gas is exhausted. Third portions 43 also extend on the outer side relative to where thin portion 210X is positioned, in order not to interfere with gas exhaust.

In the example illustrated in FIG. 5 and FIG. 6, the inner surface of the bottom portion of case 210 is not flat, but includes annular recess 210A on the outer circumference. In this case, the tip end portions of third portions 43 of current collector plate 40 may protrude toward the first main surface S1 side so as to engage with recess 210A. As a result, the protrusion of each third portion 43 contacts with case 210, thereby improving the electrical connection between current collector plate 40 and case 210. In addition, in the event of abnormal heat generation, the effect of fixing the wound body during gas exhaust can be increased.

A through hole may be provided in first portion 41 in order to facilitate injection of electrolyte during manufacturing and further facilitate gas exhaust during abnormal heat generation. First portion 41 faces the hollow region of the core of wound body 100. Hence, by providing a through hole in first portion 41 and forming a gas exhaust path, gas from the hollow region can be easily exhausted.

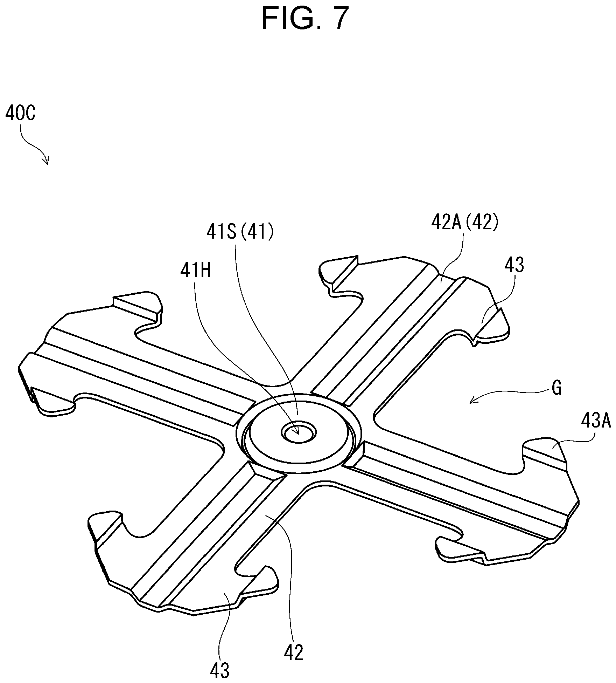

FIG. 7 illustrates an example of current collector plate 40C in which the tip end portions of third portions 43 include protrusions 43A protruding toward the first main surface S1 side and first portion 41 includes through hole 41H. In FIG. 7, the tip end portion of each third portion 43 extending in the second direction is bent to form protrusion 43A that protrudes toward the first main surface S1 side. The configuration of protrusion 43A is not limited to this configuration. For example, the tip end portion of third portion 43 may be made thicker to protrude toward the first main surface S1 side. In the example of FIG. 7, through hole 41H is provided at the center of protruding surface 41S of first portion 41. However, through hole 41H is not limited to this example, and may be provided in protruding surface 415, in a region that is on the outer side relative to the welding position with the bottom portion of the case. However, in that case, through hole 41H can be provided at a position that is not opposite to groove 42A in the circumferential direction (e.g., position that is opposite to gap G), so that the current path from groove 42A to the case through first portion 41 is not lengthened by through hole 41H.

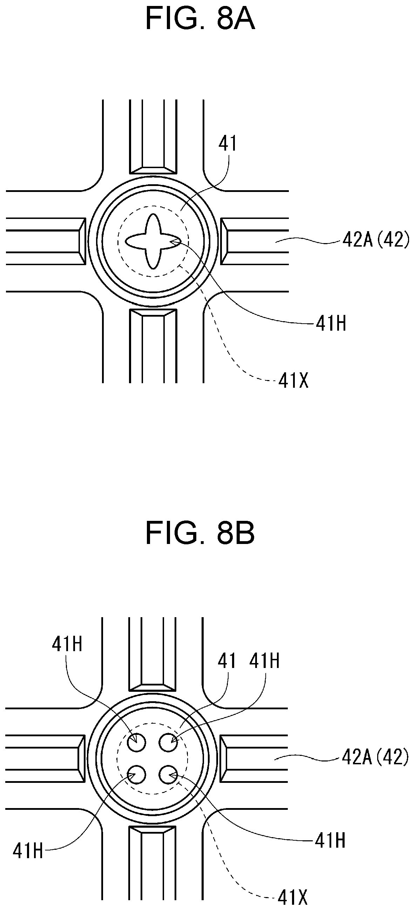

FIG. 8A and FIG. 8B illustrate other examples of current collector plates with through holes 41H in first portion 41. FIG. 8A and FIG. 8B each illustrate an enlarged top view of the region around the first portion of the current collector plate. In the examples of FIG. 8A and FIG. 8B, each through hole 41H is provided on the inner side relative to welding position 41X with the bottom portion of the case. Through hole 41H may be in the shape of a cross as illustrated in FIG. 8A, and its shape is not particularly limited. A plurality of through holes 41H may be provided as illustrated in FIG. 8B.

The material of current collector plate 40 is determined depending on the materials of the positive electrode and the negative electrode. For example, when current collector plate 40 is used as a negative electrode current collector plate of a lithium-ion secondary battery, the material of current collector plate 40 is, copper, copper alloy, nickel, stainless steel and the like. The material of the negative electrode current collector plate may be the same as the material of negative electrode current collector 21. For example, when current collector plate 40 is used as a positive electrode current collector plate of a lithium-ion secondary battery, the material of current collector plate 40 is aluminum, aluminum alloy, titanium, stainless steel, and the like. The material of the positive electrode current collector plate may be the same as the material of the positive electrode current collector.

The exposed portion of the current collector and current collector plate 40 can be joined by, for example, laser welding. For example, the laser may be emitted radially to multiple positions along groove 42A from the side of current collector plate 40 opposite to the surface of current collector plate 40 facing the end face of wound body 100 (that is, from the first main surface side). Here, welding mark extending in the first direction (radial direction of the wound body) is formed on each second portion 42 of current collector plate 40. Of both ends of the welding mark in the first direction, the first end that is closer to the first portion may be the welding start point (the point where welding starts), and the second end that is further from the first portion than the first end may be the welding end point. By welding each second portion 42 of current collector plate 40 in this way, the temperature of the second portion is higher when welding the outer side of the second portion than when welding the inner side of the second portion. As a result, the outer side of second portion 42 is easily melt during welding. Moreover, it is possible to increase the reliability of welding the joint portion between the outer side of second portion 42 of current collector plate 40 in the radial direction and one of the positive and negative electrodes. By increasing the welding reliability on the outer side of current collector plate 40 and wound body 100, it is possible to prevent the resistance from decreasing when collecting current from wound body 100 to current collector plate 40. When joining second portion 42 extending in the radial direction and wound body 100, in the winding direction, in the current collection path of wound body 100, the distance between the connection points with the second portion is longer on the outer side of wound body 100 than on the inner side of wound body 100. Hence, the current collection path in the winding direction is longer on the outer side of wound body 100. When a welding failure occurs on the outer side of second portion 42, the current collection path within the wound body tends to become longer than when a welding failure occurs on the inner side of second portion 42. As a result, the current collection resistance of power storage device 200 is likely to decrease. Accordingly, by increasing the welding reliability on the outer side of second portion 42 of current collector plate 40 in the radial direction than on the inner side of second portion 42, it is possible to prevent the current collection resistance from decreasing when collecting current from wound body 100 to current collector plate 40.

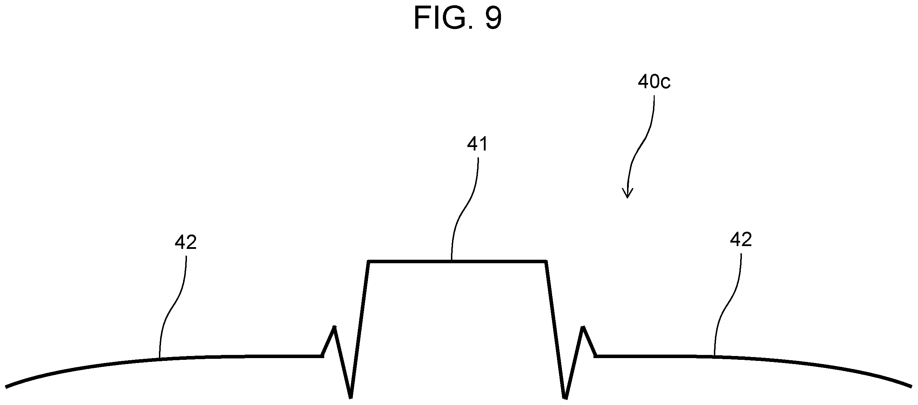

FIG. 9 is a schematic cross-sectional view illustrating current collector plate 40c which is another example of current collector plate 40 according to the present embodiment.

Moreover, each second portion 42 of current collector plate 40c may include a first region positioned on the inner side and a second region positioned on the outer side relative to the first region in the first direction (radial direction). The second region may be bent so that the second region is positioned closer to wound body 100 than the first region is. With this configuration, the second region of second portion 42 actively abuts on the outer side of wound body 100, so that the welding reliability between the outer side of wound body 100 and current collector plate 40 can be increased.

### (Positive Electrode)

A sheet-shaped metal material is used for the positive electrode current collector. The sheet-shaped metal material may be metal foil, porous metal body, etched metal, and the like. Examples of the metal material include aluminum, aluminum alloy, nickel, and titanium. The thickness of the positive electrode current collector is, for example, 10 µm to 100 µm.

The positive electrode active material layer includes, for example, a positive electrode active material, a conductive agent, and a binder. The positive electrode active material layer is obtained, for example, by applying a positive electrode mixture slurry containing a positive electrode active material, a conductive agent, and a binder onto both sides of the positive electrode current collector, and drying and rolling the applied coating. The positive electrode active material is a material that absorbs and releases lithium ions. Examples of the positive electrode active material include lithium-containing transition metal oxide, transition metal fluoride, polyanion, fluorinated polyanion, and transition metal sulfide.

### (Negative Electrode)

A sheet-shaped metal material is used for the negative electrode current collector. The sheet-shaped metal material may be metal foil, porous metal body, etched metal, and the like. Examples of the metal material include copper, copper alloy, nickel, and stainless steel. The thickness of the negative electrode current collector is, for example, 10 µm to 100 µm.

The negative electrode active material layer includes, for example, a negative electrode active material, a conductive agent, and a binder. The negative electrode active material layer is obtained by, for example, applying a negative electrode mixture slurry containing a negative electrode active material, a conductive agent, and a binder onto both sides of the negative electrode current collector, and drying and rolling the applied coating. The negative electrode active material is a material that absorbs and releases lithium ions. Examples of the negative electrode active material include carbon material, metal compound, alloy, and ceramic material.

### (Separator)

For the separator, for example, a microporous film, woven fabric, nonwoven fabric and the like made of resin, such as polyolefin, can be used. The thickness of the separator is, for example, 10 µm to 300 µm, and preferably 10 µm to 40 µm.

### (Non-aqueous Electrolyte)

The non-aqueous electrolyte has lithium ion conductivity, and includes a lithium salt and a non-aqueous solvent that dissolves the lithium salt.

### INDUSTRIAL APPLICABILITY

The current collector plate according to the present disclosure can be used to achieve a high-output power storage device, and is therefore suitable for, for example, in-vehicle applications.

### REFERENCE MARKS IN THE DRAWINGS

- 100: wound body
- 10: positive electrode
- 13: insulating layer
- 20: negative electrode
- 21x: negative electrode current collector exposed portion
- 30: separator
- 40, 40A to 40C: current collector plate
- 41: first portion
- 41S: protruding surface
- 42: second portion
- 42A: groove
- 42S: protruding surface
- 43: third portion
- 43A: protrusion
- 200: battery (power storage device)
- 210: case
- 210A: recess
- 210X: thin portion

## Claims

1. A current collector plate that is plate shaped, the current collector plate including a first main surface and a second main surface that is opposite to the first main surface, the current collector plate comprising:
a first portion that is positioned at a central portion of the current collector plate;
a plurality of second portions that extend in a first direction away from the first portion; and
a plurality of third portions that extend from portions of the plurality of second portions spaced apart from the first portion, the plurality of third portions protruding in a second direction that intersects with the first direction,
wherein, in two adjacent second portions of the plurality of second portions, a gap is provided between a third portion that extends from one of the two adjacent second portions among the plurality of third portions and a third portion that extends from an other one of the two adjacent second portions among the plurality of third portions.

2. The current collector plate according to claim 1,
wherein the plurality of second portions include at least three second portions,
a gap is provided between adjacent second portions of the at least three second portions and between adjacent third portions of the plurality of third portions, and
the gap between the adjacent second portions of the at least three second portions is wider than the gap between the adjacent third portions of the plurality of third portions.

3. The current collector plate according to claim 1 or claim 2,
wherein each of the plurality of second portions includes a groove which protrudes toward a second main surface side, the groove extending in the first direction.

4. The current collector plate according to any one of claims 1 to 3,
wherein the first portion includes a protruding surface that protrudes toward a first main surface side.

5. The current collector plate according to any one of claims 1 to 4,
wherein the plurality of second portions include four second portions that extend radially from the first portion to form an angle of 90 degrees with each other, and
a portion of an outline of each of the plurality of third portions is in contact with a predetermined square.

6. The current collector plate according to any one of claims 1 to 5,
wherein each of the plurality of third portions includes a protrusion that protrudes toward a first main surface side.

7. The current collector plate according to any one of claims 1 to 6,
wherein the first portion includes a through hole.

8. The current collector plate according to any one of claims 1 to 7, further comprising:
a plated layer stacked on each of the first main surface and the second main surface,
wherein the plated layer on the first main surface has a thickness that is thinner than a thickness of the plated layer on the second main surface.

9. A power storage device comprising:
a wound body which is columnar shaped, and in which a positive electrode and a negative electrode are wound with a separator interposed between the positive electrode and the negative electrode;
a case that houses the wound body; and
the current collector plate according to any one of claims 1 to 8,
wherein the case includes a tubular portion and a bottom portion that closes one end of the tubular portion, and
at least the first portion of the current collector plate is electrically connected to the bottom portion of the case on the first main surface side, and at least the plurality of second portions of the current collector plate are joined, on the second main surface side, to one electrode of the positive electrode or the negative electrode on an end face of the wound body that faces the second main surface.

10. The power storage device according to claim 9,
wherein the bottom portion of the case includes an explosion-proof mechanism, and
the explosion-proof mechanism is positioned in a region which is on an inner side relative to the plurality of third portions of the current collector plate and which does not overlap with the plurality of third portions.

11. The power storage device according to claim 9 or claim 10,
wherein a surface of the bottom portion of the case that faces the first main surface includes a recess, and
the recess is engaged with the protrusion of each of the plurality of third portions of the current collector plate.

12. The power storage device according to any one of claims 9 to 11,
wherein the plurality of second portions of the current collector plate are joined to the one electrode by welding,
each of the plurality of second portions includes a welding mark which is line-shaped and which extends in the first direction, and
of both ends of the welding mark in a direction in which the welding mark extends, a first end of the welding mark that is closer to the first portion is a welding start point, and a second end of the welding mark that is further from the first portion is a welding end point.

13. The power storage device according to any one of claims 9 to 12,
wherein a portion of each of the plurality of second portions of the current collector plate that is joined to the one electrode includes, in the first direction, a first region that is closer to the first portion and a second region that is positioned on an outer side relative to the first region, and
in a winding axis direction of the wound body, each of the plurality of second portions is bent to position the second region closer to the one electrode than the first region is.
